# EUROPÄISCHE PATENTSCHRIFT

(11) **EP 2 253 417 B1**
(45) Veröffentlichungstag und Bekanntmachung des Hinweises auf die Patenterteilung: **20.07.2011**
(21) Anmeldenummer: 10162503.6
(22) Anmeldetag: 11.05.2010
(51) Int. Cl.: B23Q 1/66, B23Q 11/00, B23Q 11/08, B23Q 17/24, B23Q 39/02, F16P 3/14

(54) **Bearbeitungsmaschine mit Sicherheitsscanner**
Processing machine with safety scanner
Machine de traitement dotée d'un scanner de sécurité

(30) Priorität: 15.05.2009 DE 202009007035 U
(43) Veröffentlichungstag der Anmeldung: 24.11.2010
(73) Patentinhaber: Homag Holzbearbeitungssysteme AG, 72296 Schopfloch (DE)
(72) Erfinder: Kanitz, Carsten, 72108 Rottenburg (DE); Schroth, Georg, 72172 Sulz (DE); Rohr, Jens, 78727 Oberndorf-Hochmössingen (DE); Gringel, Martin, 72479 Strassberg (DE)
(74) Vertreter: HOFFMANN EITLE

(56) Entgegenhaltungen:
- DE-A1-102006 052 017
- DE-B3-102007 009 225
- FR-A1- 2 478 514

## Beschreibung

### Technisches Gebiet

Die Erfindung betrifft eine Bearbeitungsmaschine nach dem Oberbegriff des Anspruchs 1 zum Bearbeiten von Werkstücken, die bevorzugt zumindest teilweise aus Holz, Holzwerkstoffen, holzähnlichen Stoffen, Kunststoff oder dergleichen bestehen.

Bearbeitungsmaschinen der eingangs genannten Art werden verbreitet im Bereich der Möbel- oder Bauzulieferindustrie (z.B. zur Herstellung von Holztreppen) eingesetzt. Bei diesen Maschinen ist meist die Bearbeitungseinheit, gegebenenfalls aber auch die Werkstückspanneinheit oder beide Einheiten verfahrbar ausgestaltet.

### Stand der Technik

Wegen der hohen Schnittgeschwindigkeiten, die bei der Holzbearbeitung möglich sind, können die beweglichen Maschinen-Baugruppen mit relativ hohen Geschwindigkeiten verfahren werden. Deshalb werden gerade bei CNC-gesteuerten Bearbeitungszentren für die Holzbearbeitung hohe Anforderungen an die Sicherheit der Bedienpersonen gestellt, um bei einem vor allem unbeabsichtigen Überschreiten der Gefahrengrenze das Stillsetzen des betreffenden, gefährdenden Maschinenteils einzuleiten.

So weisen bekannte Bearbeitungsmaschinen verschiedene Schutzeinrichtungen auf, beispielsweise einen umlaufenden Schutzzaun mit einer Tür oder dergleichen.

Allerdings besteht auch in manchen Situationen die Notwendigkeit, während des Betriebes der Bearbeitungsmaschine an die Maschineneinheiten heranzutreten, beispielsweise um den Bearbeitungsbetrieb zu überwachen.

Vor diesem Hintergrund ist es bekannt, eine oder mehrere Maschineneinheiten mit Kontaktsensoren zu versehen, die den Betrieb oder zumindest die Verfahrbewegungen der Maschineneinheiten anhalten, sobald ein Kontakt mit einem Gegenstand oder einer Person festgestellt wird. Bei derartigen Konstruktionen sind jedoch nur vergleichsweise geringe Arbeitsgeschwindigkeiten von beispielsweise < 40 m/min zugelassen, um beim Aufprall des Kontaktsensors eine Verletzung auszuschließen.

Als Alternative zu Kontaktsensoren sind Lichtschranken bekannt, die den Betrieb oder die Verfahrbewegungen der Maschineneinheiten anhalten, sobald ein Gegenstand oder eine Person in den durch die Lichtschranke überwachten Bereich eindringt.

Aus DE 10 2006 052 017 B4 (Homag) ist ebenfalls eine Bearbeitungsmaschine der eingangs genannten Art bekannt. Hier wird ein zweistufiges Sicherheitskonzept realisiert, bei welchem ein erster, kontaktlos arbeitender Sensor (z.B. ein optischer Laserscanner) eine Vorerfassung sich annähernder Gegenstände oder Personen ausführt. Eine Steuereinrichtung ist vorgesehen, die eine Verfahrbewegung einer bewegten Maschineneinheit verlangsamt, wenn der kontaktlos arbeitende Sensor einen Gegenstand oder eine Person erfasst. Ein vollständiges Anhalten der Maschine oder jedenfalls der Verfahrbewegungen der Maschineneinheiten wird aber erst ausgelöst, wenn ein zweiter Sensor auf einen Gegenstand oder eine Person trifft.

Die DE 10 2007 009 225 B3 offenbart eine in Gantry-Bauweise gestaltete Bearbeitungsvorrichtung, bei welcher ein Kamerakopf mehrere Schutzbereiche erfasst, wobei der Kamerakopf auf einem bewegten Abschnitt der Bearbeitungsvorrichtung angeordnet ist. Dabei weist der Kamerakopf bauartbedingt einen großen toten Winkel auf und ist lediglich dazu ausgebildet, um Schutzbereiche in unmittelbarer Nähe des bearbeiteten Bereichs zu erfassen, wodurch sich ein unüberwachter Bereich ergibt. In diesen unüberwachten Bereich, der in einem für Personen zugänglichen Abschnitt der Bearbeitungsvorrichtung angeordnet ist, kann keine ausreichende Sicherheit für Personen sichergestellt werden, die sich an der Bearbeitungsvorrichtung aufhalten.

### Darstellung der Erfindung

Der Erfindung liegt die Aufgabe zugrunde, eine Bearbeitungsmaschine der eingangs genannten Art bereitzustellen, deren Sicherheitseinrichtung eine Gefährdung von Personen so weit wie möglich ausschließt und gleichzeitig die Verfügbarkeit der Maschine gewährleistet.

Diese Aufgabe wird erfindungsgemäß durch eine Bearbeitungsmaschine mit den Merkmalen des Anspruchs 1 und durch ein Bearbeitungsverfahren mit den Merkmalen des Anspruchs 9 gelöst.

Demzufolge ist die verfahrbare Bearbeitungseinheit zwischen zwei dynamischen Bereichen verfahrbar. Die Werkstücke können jeweils in einem dieser beiden dynamischen Bereiche mittels der verfahrbaren Bearbeitungseinheit bearbeitet werden, während in dem zweiten dynamischen Bereich ein Be- und Entladen der Werkstücke erfolgen kann. Erfindungsgemäß ist zusätzlich zu dem an der verfahrbaren Bearbeitungseinheit vorgesehenen ersten Sensor, der eingerichtet ist, in einen im Bereich der verfahrbaren Bearbeitungseinheit definierten Sicherheitsbereich eindringende Gegenstände, Personen, etc. zu erfassen, noch ein zweiter Sensor vorhanden, der eingerichtet ist, in dem zweiten dynamischen Bereich anwesende Gegenstände, Personen, etc. zu erfassen, bevor die Bearbeitungseinheit in den zweiten dynamischen Bereich verfahren wird, wobei der zweite Sensor einen stationär an der Bearbeitungsmaschine angeordneten Abschnitt aufweisen kann.

In jedem der beiden dynamischen Bereiche kann daher abwechselnd ein Beladen mit Werkstücken und ein Bearbeiten der Werkstücke stattfinden. Während in einem Bereich zu bearbeitende Werkstücke vorgesehen oder fertig bearbeitete Werkstücke abtransportiert werden können, können gleichzeitig im anderen Bereich Werkstücke bearbeitet werden (sog. Pendelbearbeitung). Dabei ist jedoch zu beachten, dass die erfindungsgemäße Bearbeitungsmaschine nicht darauf beschränkt ist, dass stets ein Pendelbetrieb durchgeführt wird. Vielmehr kann die erfindungsgemäße Bearbeitungsmaschine beispielsweise auch bei sogenannter Einfeldbelegung oder anderen Betriebsarten eingesetzt werden. Dies kommt beispielsweise bei größeren Werkstücken vor. In diesem Falle wird beispielsweise nur ein dynamischer Bereich tatsächlich zum Be- und Entladen von Werkstücken verwendet.

Der im Bereich der verfahrbaren Maschineneinheit definierte Sicherheitsbereich bewegt sich mit der verfahrbaren Maschineneinheit mit.

An oder in der verfahrbaren Maschineneinheit befindet sich der ebenfalls mitbewegte erste Sensor. Wenn der Sicherheitsbereich durch eine Person betreten wird, wird dies mittels des ersten Sensors erfasst.

Der zweite Sensor erfasst die Anwesenheit von Gegenständen oder Personen im zweiten dynamischen Bereich, d.h. im Beladebereich. Wenn die Bearbeitung der Werkstücke im ersten dynamischen Bereich, d.h. im Bearbeitungsbereich beendet ist und die verfahrbare Maschineneinheit in den Beladebereich einfahren soll, wird zunächst mittels des zweiten Sensors überprüft, ob sich eine Person in dem Beladebereich befindet. Besonders bevorzugte Ausführungsformen der Erfindung sind in den anhängigen Ansprüchen angegeben.

Die Bearbeitungsmaschine kann insbesondere in Gantry-Bauweise ausgestaltet sein. Die Bearbeitungseinheit ist dann über einem stationären Werkstückspanntisch verfahrbar.

Um das Sicherheitsniveau weiter zu erhöhen, ist gemäß einer Weiterbildung der Erfindung vorgesehen, dass die verfahrbare Bearbeitungseinheit eine Sicherheitsumhausung aufweist, welche die Bearbeitungseinheit zumindest teilweise umschließt. Auf diese Weise wird sichergestellt, dass eine Bedienperson den Betrieb der Maschine beobachten, jedoch nicht in gefährliche Bereiche wie beispielsweise in den Bereich von Bearbeitungsaggregaten eingreifen kann. Dabei ist der erste Sensor im Bereich dieser Sicherheitsumhausung vorgesehen.

Der erste Sensor ist vorzugsweise ein kontaktlos arbeitender Sensor, der im Rahmen der vorliegenden Erfindung auf unterschiedlichste Art und Weise ausgestaltet sein kann. Es können im Grunde alle bisher bekannten und noch zu entwickelnden Ausgestaltungen gewählt werden. Im Hinblick auf eine schnelle, präzise und störungsfreie Erfassung hatte sich jedoch als vorteilhaft erwiesen, dass ein Lasersensor, Infrarotsensor, Ultraschallsensor, Lasertriangulationssensor oder Bilderfassungssensor gewählt wird. Bei dem Bilderfassungssensor kann es sich beispielsweise um eine Kamera wie eine Digitalkamera oder CCD-Kamera handeln, welche die Anwesenheit eines Gegenstands beispielsweise auf der Grundlage eines Soll-/Ist-Vergleichs beurteilt.

Der erste Sensor wird dabei vorzugsweise so ausgewählt, dass er Personen im definierten Sicherheitsbereich der Maschine sicher erkennen kann, auch wenn sich im Bereich Staub oder Späne befinden. Bei bisher bekannten Systemen ergab sich mitunter die Schwierigkeit, dass die jeweiligen Sensoren auch auf Staub oder Späne ansprachen und dadurch ein unnötiges Abschalten der Bearbeitungsmaschine erfolgte. Dies sollte durch geeignete Auswahl des Sensors, der ggf. über einen entsprechendes Filtersystem verfügt, nach Möglichkeit verhindert werden.

Um auch im Umfeld schmutzbehafteter Bearbeitungen wie beispielsweise spanender Bearbeitungen einen zuverlässigen Betrieb des mindestens einen kontaktlos arbeitenden Sensors sicherzustellen, ist gemäß einer Weiterbildung der Erfindung vorgesehen, dass die Bearbeitungsmaschine ferner eine Reinigungseinrichtung für den mindestens einen kontaktlos arbeitenden Sensor aufweist, insbesondere eine Abblaseinrichtung.

Der zweite Sensor kann beispielsweise ein Kontaktsensor sein. Die Ausgestaltung dieses Kontaktsensors ist im Rahmen der Erfindung nicht besonders beschränkt, obgleich sich Druckschalter, Druckschalterleisten, Seilzugschalter und so genannte Bumper als besonders vorteilhaft erwiesen haben. Vorzugsweise ist der zweite Sensor aber ein berührungsloser Sensor wie beispielsweise eine Lichtschranke, wobei ein Senderabschnitt (erster Abschnitt) stationär an der Bearbeitungsmaschine und ein Empfangsabschnitt (zweiter Abschnitt) mitbewegbar an der Bearbeitungseinheit oder ein Senderabschnitt mitbewegbar an der Bearbeitungseinheit und ein Empfangsabschnitt stationär (ortsfest) an der Bearbeitungsmaschine angeordnet sind. Auf diese Weise ist es besonders vorteilhaft möglich, in die dynamischen Bereiche eindringende bzw. eingedrungene Gegenstände oder Personen exakt zu erfassen.

Gemäß einer Weiterbildung der Erfindung besitzt die Bearbeitungsmaschine ferner eine Steuereinrichtung, die eingerichtet ist, den Betrieb zumindest eines Teils der Bearbeitungsmaschine anzuhalten und/oder das weitere Verfahren der verfahrbaren Bearbeitungseinheit zu verhindern, wenn
- der erste Sensor einen Gegenstand oder eine Person in dem Sicherheitsbereich erfasst, oder
- die verfahrbare Bearbeitungseinheit in den Beladebereich verfahren werden soll und der zweite Sensor einen Gegenstand oder eine Person in dem Beladebereich erfasst.

Durch diese Steuerung der beiden Sensoren wird wie folgt ein zweistufiges Sicherheitskonzept realisiert: der erste Sensor reagiert auf Personen und Gegenstände im Sicherheitsbereich, der sich mit der verfahrbaren Maschineneinheit mitbewegt. Wenn der erste Sensor eine Person oder einen Gegenstand, der eine Gefährdung bewirken könnte, in diesem Sicherheitsbereich erkennt, werden zumindest die Antriebe des gefährdenden Maschinenteils unmittelbar angehalten, um eine Gefährdung der Person auszuschließen. Anders als im oben genannten Stand der Technik werden die Antriebe dabei nicht nur verlangsamt, sondern auch abgeschaltet.

Der zweite Sensor erfasst dagegen die Anwesenheit von Personen oder gefährdenden Gegenständen im zweiten dynamischen Bereich, d.h. im Beladebereich. Dabei kann die Anwesenheit von Personen und Gegenständen im Beladebereich durchaus zulässig sein, solange die Bearbeitung der Werkstücke im ersten dynamischen Bereich, d.h. im Bearbeitungsbereich abläuft. Erst wenn die verfahrbare Maschineneinheit in den Beladebereich verfahren werden soll, um die dort vorgesehenen Werkstücke zu bearbeiten, können Personen im Beladebereich gefährdet sein. In diesem Fall bewirkt die Steuerung auf der Grundlage eines entsprechenden Signals des zweiten Sensors, dass die verfahrbare Maschineneinheit erst gar nicht in den Beladebereich verfahren werden kann. Erst wenn sich die Personen aus dem Beladebereich entfernt haben, wird die verfahrbare Maschineneinheit wieder freigegeben.

Die Erfindung zeichnet sich ferner durch ein Bearbeitungsverfahren zum Bearbeiten von Werkstücken aus, bei welchem eine Bearbeitungsmaschine der vorher beschriebenen Art zum Einsatz kommt. Das Verfahren umfasst dabei den Schritt des Erfassens mit einem zweiten Sensor, ob sich in dem zweiten dynamischen Bereich Personen oder Gegenstände befinden, bevor die Bearbeitungseinheit in den zweiten dynamischen Bereich verfahren wird und den Schritt des Verlangsamens bzw. des Anhaltens der Bearbeitungseinheit, falls sich Personen oder Gegenstände in dem zweiten dynamischen Bereich befinden. Auf diese Weise ist es besonders vorteilhaft möglich, den zweiten dynamischen Bereich exakt zu überwachen, so dass sich Personen bzw. Gegenstände während einer Bearbeitung in dem ersten dynamischen Bereich mit Vorteil in dem zweiten dynamischen Bereich aufhalten können. Auf diese Weise ist es beispielsweise möglich, den zweiten dynamischen Bereich mit zu bearbeitenden Werkstücken zu versehen, diese zu entnehmen und/oder Wartungstätigkeiten oder dergleichen dort durchzuführen. Ferner wird durch das Verlangsamen bzw. Anhalten der Bearbeitungseinheit, falls sich Personen oder Gegenstände in dem zweiten dynamischen Bereich befinden, die Sicherheit erhöht.

Gemäß einer bevorzugten Weiterbildung des Verfahrens ist die Anwesenheit von Personen und/oder Gegenständen in dem zweiten dynamischen Bereich während der Bearbeitung in dem ersten dynamischen Bereich zulässig. Auf diese Weise erhöht sich die Effizienz des Bearbeitungsverfahrens, da es auf diese Weise mit Vorteil möglich ist, manuell oder automatisch Werkstücke in den zweiten dynamischen Bereich einzubringen oder aus diesem zu entnehmen.

Gemäß einer weiteren Ausführungsform des Verfahrens wird, sobald sich die Person bzw. der Gegenstand, die sich nach dem Verlagsamen bzw. dem Anhalten in dem zweiten dynamischen Bereich aufhalten, entfernt haben, die Bearbeitungseinheit zum Bearbeiten in den zweiten dynamischen Bereich verfahren und eine Bearbeitung durchgeführt. Auf diese Weise ist es besonders vorteilhaft möglich, unmittelbar nachdem der "Sicherheitsbereich" (also der zweite dynamische Bereich) geräumt wurde, eine Bearbeitung wieder durchzuführen bzw. erneut aufzunehmen.

### Kurze Beschreibung der Zeichnungen

Figur 1 zeigt schematisch eine Frontansicht einer erfindungsgemäßen Bearbeitungsmaschine;
Figur 2 zeigt schematisch eine Draufsicht der in Figur 1 gezeigten Bearbeitungsmaschine;
Figur 3 zeigt schematisch eine Seitenansicht der in Figur 1 gezeigten Bearbeitungsmaschine; und
Figur 4 ist eine schematische, vergrößerte Darstellung eines Sicherheitsbereichs der in Figur 1 gezeigten Bearbeitungsmaschine.

### Ausführliche Beschreibung bevorzugter Ausführungsformen

Bevorzugte Ausführungsformen der Erfindung werden nachfolgend ausführlich in Bezugnahme auf die begleitenden Zeichnungen beschrieben.

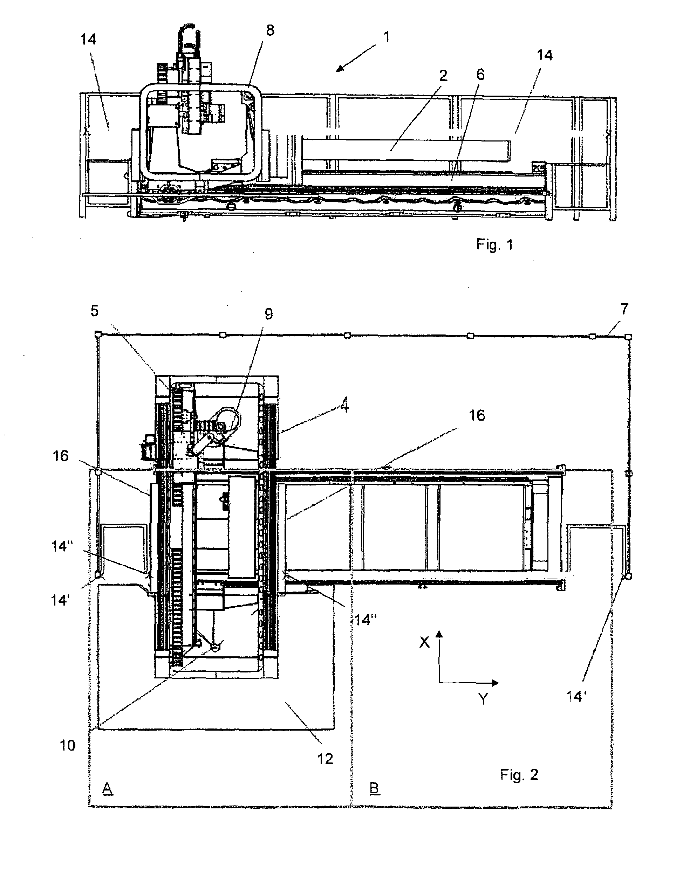

Die Bearbeitungsmaschine 1 als bevorzugte Ausführungsform der vorliegenden Erfindung ist in den Figuren 1 bis 3 schematisch in einer Frontansicht, Draufsicht und Seitenansicht gezeigt. Die Bearbeitungsmaschine 1 dient in der vorliegenden Ausführungsform zum Bearbeiten von plattenförmigen Werkstücken 2, die beispielsweise zumindest teilweise aus Holz, Holzwerkstoffen oder dergleichen bestehen, wie sie im Bereich der Möbel- oder Bauzulieferindustrie häufig benötigt werden.

Die Bearbeitungsmaschine 1 besitzt eine Bearbeitungseinheit 4, die in der vorliegenden Ausführungsform einen in einer X-Richtung (von links nach rechts in Figur 2) verfahrbaren Ausleger 5 aufweist. An dem Ausleger 5 ist mindestens ein Bearbeitungsaggregat 9 derart vorgesehen, dass es entlang des Auslegers 5 in einer Y-Richtung sowie in einer Z-Richtung (senkrecht zu Zeichenebene von Figur 2) verfahrbar ist. Das Bearbeitungsaggregat 9 kann beispielsweise dazu ausgelegt sein, spanende Bearbeitungen an den plattenförmigen Werkstücken 2 aufzuführen oder diese mit einer Kante zu versehen. Im Regelfall werden mehrere solcher Bearbeitungsaggregate vorgesehen sein, wobei es sich z.B. auch um Fräs-, Bohr- und Anleimaggregate handeln kann.

Es sei darauf hingewiesen, dass anstelle des Auslegers 5 beispielsweise auch ein Portal oder eine andere Führungseinrichtung für das Bearbeitungsaggregat 9 vorhanden sein kann.

Am hinteren Ende des Auslegers 5 ist ein Werkzeugmagazin vorgesehen, mittels dessen Bearbeitungswerkzeuge in das Bearbeitungsaggregat 9 eingewechselt werden können.

Ferner besitzt die Bearbeitungsmaschine 1 einen Werkstückspanntisch 6, der unterhalb des Auslegers 5 in dessen Verfahrbereich angeordnet und dazu vorgesehen ist, die Werkstücke 2 während der Bearbeitung zu halten. Der Werkstückspanntisch 6 ist in der vorliegenden Ausführungsform stationär angeordnet. Die Bearbeitungsmaschine 1 ist hier somit in Gantry-Bauweise realisiert. Alternativ könnte der Werkstückspanntisch 6 zusätzlich zu dem Ausleger 5 ebenfalls verfahrbar sein.

Die Bearbeitungsmaschine 1 ist (zumindest gedanklich) in zwei dynamische Bereiche A und B unterteilt, in denen jeweils abwechselnd ein Beladen mit Werkstücken 2 und ein Bearbeiten der Werkstücke 2 mittels des Bearbeitungsaggregats 9 stattfinden kann (obgleich die Erfindung nicht auf einen sogenannten Pendelbetrieb beschränkt ist). Im Wechsel kann somit einer der beiden Bereiche A und B ein Bearbeitungsbereich, der andere ein Beladebereich sein. Während im Beladebereich Werkstücke vorgesehen werden, werden gleichzeitig im Bearbeitungsbereich Werkstücke bearbeitet. In der Darstellung der Figur 2 befindet sich der Ausleger 5 mit dem Bearbeitungsaggregat 9 im linken Bereich A, der momentan der Bearbeitungsbereich ist. Rechts davon befindet sich der Bereich B, der momentan der Beladebereich ist, in dem Be- und Entladevorgänge von zu bearbeitenden bzw. fertig bearbeiteten Werkstücken stattfinden können. Diese Be- und Entladevorgänge können manuell oder automatisiert mittels geeigneter und an sich bekannter Zuführeinrichtungen erfolgen.

Sobald die Bearbeitung der Werkstücke 2 in dem momentanen Bearbeitungsbereich abgeschlossen ist, verfährt der Ausleger 5 in den momentanen Beladebereich, und die dort vorgesehenen Werkstücke 2 werden bearbeitet. Der Beladebereich wird so zum Bearbeitungsbereich. In der Darstellung der Figur 2 wäre somit der rechte Bereich B der Bearbeitungsbereich, der linke Bereich A der Beladebereich, aus dem die fertig bearbeiteten Werkstücke abtransportiert würden und in dem neue Rohwerkstücke vorgesehen würden.

Während des Betriebes der Bearbeitungsmaschine 1 werden die Werkstücke 2 somit in einem der beiden dynamischen Bereiche, der dem momentanen Bearbeitungsbereich A entspricht, mittels des am Ausleger 5 vorgesehenen Bearbeitungsaggregats bearbeitet, während das Bearbeitungsaggregat 9 durch Verfahrbewegungen des Auslegers 5 in X-Richtung und gegebenenfalls Verfahrbewegungen entlang des Auslegers 5 in Y- und/oder Z-Richtung in Bezug auf die Werkstücke 2 verfahren wird. Um die Bearbeitungszeit möglichst kurz zu halten, wird der Ausleger 5 dabei mit einer möglichst hohen Betriebsgeschwindigkeit verfahren, was zu einer Gefährdung von Personen führen kann.

Ferner besitzt die Bearbeitungsmaschine 1 eine Sicherheitsumhausung 8, welche die Bearbeitungseinheit 4 umschließt und vor allem dafür sorgt, dass keine Teile aus der Bearbeitungsmaschine 1 herausgeschleudert werden. Darüber hinaus hält die Sicherheitsumhausung 8 auch Späne zurück.

Im Bereich der verfahrbaren Maschineneinheit 4 ist ein Sicherheitsbereich 12 definiert, der sich mit dem Ausleger 5 mitbewegt. Der Sicherheitsbereich erstreckt sich dabei, wie sich aus Figur 2 ebenfalls ergibt, unterhalb und schräg vor dem freien Ende des Auslegers 5 und über die besagte Sicherheitsumhausung 8 hinaus. Beispielsweise kann der Sicherheitsbereich 12 sich etwa 700 oder 1000 mm über die Sicherheitsumhausung 8 hinaus erstrecken. Die Größe des Sicherheitsbereichs kann sich dabei auch an geltenden oder zukünftigen Normen orientieren.

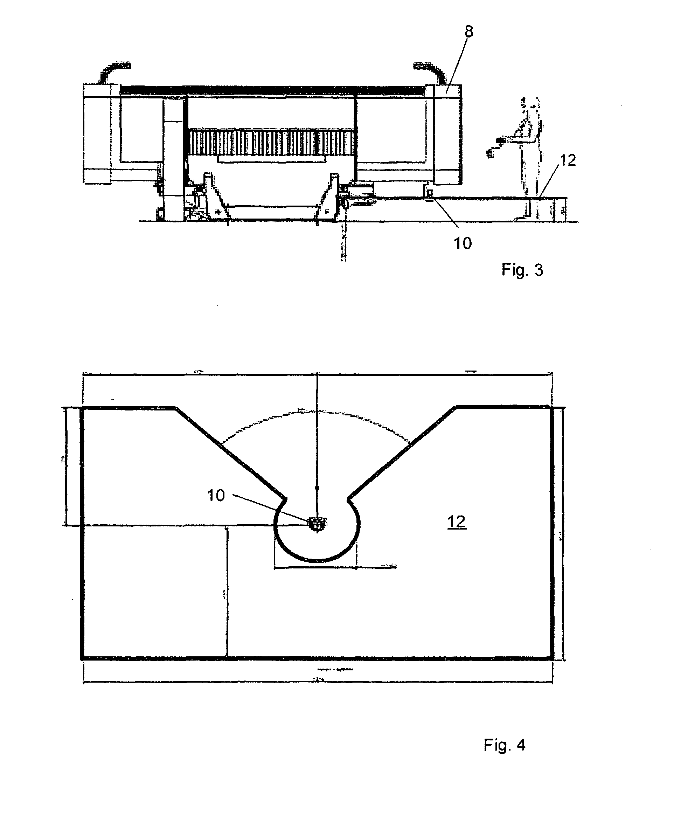

Figur 4 ist eine schematische, vergrößerte Darstellung des Sicherheitsbereichs 12.

An oder in der verfahrbaren Maschineneinheit 4 befindet sich ein ebenfalls mitbewegter erster, kontaktlos arbeitender Sensor, der in der vorliegenden Ausführungsform als optischer Sicherheitslaserscanner 10 realisiert ist. Der erste Sensor 10 erfasst während des Betriebs der Bearbeitungsmaschine 1 das Eindringen von Gegenständen und Personen in den Sicherheitsbereich 12.

Die Bearbeitungsmaschine 1 weist schließlich eine in den Zeichnungen nicht eigens gezeigte Steuereinrichtung auf, auf die eine Bedienperson zugreifen kann, um den Betrieb der Maschine zu steuern. Dabei ist die Steuereinrichtung auch dazu eingerichtet, den Betrieb der Bearbeitungsmaschine 1 auf der Grundlage der vom ersten Sensor 10 gelieferten Signale zu steuern. Wenn der Sicherheitsbereich 12 durch eine Person betreten wird, wird dies mittels des ersten Sensors 10 erfasst. Die Steuerung bewirkt dann, dass zumindest der Antrieb der gefährdenden Maschinenteile angehalten wird. Im vorliegenden Fall würden insbesondere die Verfahrbewegungen des Auslegers 5 und des Bearbeitungsaggregats 9 gestoppt sowie ggf. der Antrieb der Bearbeitungsaggregats 9 selbst. Gegebenenfalls kann auch der Betrieb der gesamten Bearbeitungsmaschine 1 gestoppt werden.

Bei dem kontaktlos arbeitenden Sensor 10 handelt es sich in der vorliegenden Ausführungsform wie gesagt um einen Lasersensor. Wie oben bereits erwähnt, können aber auch andersartige Sensoren zum Einsatz kommen.

In den Figuren nicht gezeigt ist eine in der vorliegenden Ausführungsform ebenfalls vorgesehene Abblaseinrichtung für den kontaktlos arbeitenden Sensor 10, die dazu vorgesehen ist, den Sensor bei Bedarf zu reinigen. Der Verschmutzungszustand des Sensors 10 kann dabei auf an sich bekannte Art und Weise überwacht werden.

Während des Betriebs der Bearbeitungsmaschine 1 führt der kontaktlos arbeitende Sensor 10 kontinuierlich einen Überwachungsbetrieb des Sicherheitsbereichs 12 aus.

Zusätzlich sind in der erfindungsgemäßen Bearbeitungsmaschine 1 zweite Sensoren vorgesehen, die in dem momentanen Beladebereich B anwesende Personen erfassen können.

Dabei kann die Anwesenheit von Personen im momentanen Beladebereich B durchaus zulässig sein, solange die Bearbeitung der Werkstücke im momentanen Bearbeitungsbereich A abläuft. Erst wenn der Ausleger 5 in den Beladebereich B verfahren werden soll, können im Beladebereich B anwesende Personen gefährdet sein. Wenn der Ausleger 5 in den Beladebereich B verfahren werden soll, um die dort vorgesehenen Werkstücke 2 zu bearbeiten, werden daher die zweiten Sensoren herangezogen, um die Anwesenheit von Personen im Beladebereich zu erfassen.

In der vorliegenden Ausführungsform sind diese zweiten Sensoren einerseits in Form von Lichtschranken realisiert. Die Lichtschranken 14 werden jeweils von einem fest (stationär) installierten Sender 14' und einem mit dem Ausleger 5 mitbewegten Empfänger 14" gebildet. Alternativ könnten natürlich auch die Empfänger fest installiert sein und die Sender mit dem Ausleger 5 mitbewegt werden.

Soll der Ausleger 5 in den momentanen Beladebereich B verfahren werden, so wird die entsprechende Lichtschranke 14 aktiviert (wobei die Lichtschranke 14 ggf. auch kontinuierlich betrieben werden kann). In der Darstellung gemäß Figur 2 würde beispielsweise, wenn der Ausleger 5 aus der gezeigten Stellung im Bearbeitungsbereich A nach rechts in den Beladebereich B verfahren werden sollte, die rechts vom Ausleger 5 vorgesehene Lichtschranke 14 aktiviert. Ein entsprechendes Signal der aktivierten Lichtschranke 14 bewirkt dann, dass der Ausleger 5 erst gar nicht in den Beladebereich verfahren werden kann. Erst wenn sich die Personen aus dem Beladebereich entfernt haben, wird der Ausleger 5 wieder freigegeben.

Die dargestellte Ausführungsform weist zusätzlich beiderseits des Auslegers 5 Bumper 16 auf, die mit dem Ausleger 5 zusammen verfahren werden und ebenfalls die Anwesenheit von Personen im Beladebereich B erfassen, also ebenfalls als zweite Sensoren fungieren. Diese Bumper 16 sind aber optional und müssen nicht unbedingt zusätzlich zu den Lichtschranken 14 vorgesehen sein.

Wie in Figur 2 am besten zu erkennen ist, ist die Bearbeitungsmaschine 1 an drei Seiten (links, rechts und hinten) durch einen Schutzzaun 7 oder andere Schutzeinrichtungen umgeben, so dass die Bearbeitungsmaschine 1 nur von vorn zugänglich ist und in diesem vorderen Bereich einer sicherheitstechnischen Überwachung unterworfen werden muss. Alternativ wäre es auch denkbar, an zumindest einer weiteren Seite eine elektronische Absicherung über entsprechende Sensoren vorzusehen.

## Patentansprüche

1. Bearbeitungsmaschine (1) zum Bearbeiten von Werkstücken (2), die bevorzugt zumindest teilweise aus Holz, Holzwerkstoffen, holzähnlichen Stoffen, Kunststoff oder dergleichen bestehen,
mit mindestens einer verfahrbaren
Bearbeitungseinheit (4), die einen ersten Sensor (10) aufweist, der eingerichtet ist, in einen im Bereich der verfahrbaren Bearbeitungseinheit (4) definierten Sicherheitsbereich (12) eindringende Gegenstände und Personen zu erfassen,
**dadurch gekennzeichnet, dass**
die verfahrbare Bearbeitungseinheit (4) zwischen zwei dynamischen Bereichen (A, B) verfahrbar ist und die Werkstücke (2) jeweils in einem (A) dieser beiden dynamischen Bereiche mittels der verfahrbaren Bearbeitungseinheit (4) bearbeitet werden können, während in dem zweiten (B) dynamischen Bereich ein Be- und Entladen der Werkstücke (2) erfolgen kann, und
die Bearbeitungsmaschine ferner einen zweiten Sensor (14) aufweist, der eingerichtet ist, in dem zweiten dynamischen Bereich (B) anwesende Gegenstände und Personen zu erfassen, bevor die Bearbeitungseinheit (4) in den zweiten dynamischen Bereich (B) verfahren wird.

2. Bearbeitungsmaschine nach Anspruch 1, welche in Gantry-Bauweise ausgestaltet ist, so dass die Bearbeitungseinheit (4) über einem stationären Werkstückspanntisch (6) verfahrbar ist.

3. Bearbeitungsmaschine nach Anspruch 1 oder 2, bei welcher die verfahrbare Bearbeitungseinheit (4) eine Sicherheitsumhausung (8) aufweist, welche die Bearbeitungseinheit (4) zumindest teilweise umschließt, wobei der erste Sensor (10) im Bereich dieser Sicherheitsumhausung (8) vorgesehen ist.

4. Bearbeitungsmaschine nach einem der vorangehenden Ansprüche, bei welcher der erste Sensor (10) ein kontaktlos arbeitender Sensor ist, insbesondere ein Lasersensor, Infrarotsensor, Ultraschallsensor, Lasertriangulationssensor oder Bilderfassungssensor.

5. Bearbeitungsmaschine nach Anspruch 4, die ferner eine Reinigungseinrichtung für den kontaktlos arbeitenden Sensor (10) aufweist, insbesondere eine Abblaseinrichtung.

6. Bearbeitungsmaschine nach einem der vorangehenden Ansprüche, bei welcher der zweite Sensor (14) ein berührungsloser Sensor wie beispielsweise eine Lichtschranke ist.

7. Bearbeitungsmaschine einem der vorangehenden Ansprüche, bei der der zweite Sensor (14) einen an der Bearbeitungsmaschine (1) stationär installierten Abschnitt (14') und einen an der Bearbeitungseinheit (4) angeordneten mitbewegten Abschnitt (14'') aufweist.

8. Bearbeitungsmaschine nach einem der vorhergehenden Ansprüche, die ferner eine Steuereinrichtung aufweist, die eingerichtet ist, den Betrieb zumindest eines Teils der Bearbeitungsmaschine anzuhalten und/oder das weitere Verfahren der verfahrbaren Bearbeitungseinheit (4) zu verhindern, wenn
- der erste Sensor (10) einen Gegenstand oder eine Person in dem Sicherheitsbereich (12) erfasst, oder
- die verfahrbare Bearbeitungseinheit (4) in den Beladebereich (B) verfahren werden soll und der zweite Sensor (14) einen Gegenstand oder eine Person in dem Beladebereich (B) erfasst.

9. Bearbeitungsverfahren zum Bearbeiten von Werkstücken (2), die bevorzugt zumindest teilweise aus Holz, Holzwerkstoffen, holzähnlichen Stoffen, Kunststoff oder dergleichen bestehen,
unter Einsatz einer Bearbeitungsmaschine nach einem der vorhergehenden Ansprüche,
wobei das Bearbeitungsverfahren die folgenden Schritte umfasst:
- Erfassen, ob sich in dem zweiten dynamischen Bereich (B) Personen oder Gegenstände befinden, bevor die Bearbeitungseinheit (4) in den zweiten dynamischen Bereich (B) verfahren wird mit einem zweiten Sensor (14) und
- Verlangsamen bzw. Anhalten der Bearbeitungseinheit (4), falls sich Personen oder Gegenstände in dem zweiten dynamischen Bereich (B) befinden.

10. Bearbeitungsverfahren nach Anspruch 9, bei dem die Anwesenheit von Personen und/oder Gegenständen in dem zweiten dynamischen Bereich (B) während der Bearbeitung in dem ersten dynamischen Bereich (A) zulässig ist.

11. Bearbeitungsverfahren nach Anspruch 9 oder 10, bei dem sobald sich die nach dem Verlangsamen bzw. Anhalten in dem zweiten dynamischen Bereich (B) aufhaltende Person oder der Gegenstand entfernt haben, die Bearbeitungseinheit (4) zum Bearbeiten in den zweiten dynamischen Bereich (B) verfahren wird.

## Claims

1. Machining apparatus (1) for machining workpieces (2) which are preferably at least partially made of wood, derived timber products, wood-like materials, plastic or the like,
having at least one movable machining unit (4) which has a first sensor (10) which is designed to detect objects and persons entering a safety area (12) defined in the region of the movable machining unit (4),
**characterised in that**
the movable machining unit (4) is movable between two dynamic areas (A, B) and the workpieces (2) can in each case be machined in one (A) of these two dynamic areas by means of the movable machining unit (4), while loading and unloading of the workpieces (2) can be effected in the second (B) dynamic area, and
the machining apparatus further has a second sensor (14) which is designed to detect objects and persons present in the second dynamic area (B) before the machining unit (4) is moved into the second dynamic area (B).

2. Machining apparatus according to claim 1, which is constructed with a gantry design so that the machining unit (4) is movable above a stationary workpiece clamping table (6).

3. Machining apparatus according to claim 1 or 2, in which the movable machining unit (4) has a safety housing (8) which at least partially encompasses the machining unit (4), wherein the first sensor (10) is provided in the region of this safety housing (8).

4. Machining apparatus according to any of the preceding claims, in which the first sensor (10) is a contactlessly operating sensor, in particular a laser sensor, infrared sensor, ultrasound sensor, laser triangulation sensor or image capture sensor.

5. Machining apparatus according to claim 4, which further has a cleaning device for the contactlessly operating sensor (10), in particular a blowing device.

6. Machining apparatus according to any of the preceding claims, in which the second sensor (14) is a contactless sensor such as for example a light barrier.

7. Machining apparatus according to any of the preceding claims, in which the second sensor (14) has a section (14') installed stationarily on the machining apparatus (1) and a section (14") mounted on the machining unit (4) and moved with it.

8. Machining apparatus according to any of the preceding claims, which further has a control device which is designed to stop the operation of at least a part of the machining apparatus and/or to prevent further movement of the movable machining unit (4) if
- the first sensor (10) detects an object or person in the safety area (12), or
- the movable machining unit (4) is to be moved into the loading area (B) and the second sensor (14) detects an object or person in the loading area (B).

9. Machining method for machining workpieces (2) which are preferably at least partially made of wood, derived timber products, wood-like materials, plastic or the like,
using a machining apparatus according to any of the preceding claims,
wherein the machining method comprises the following steps:
- detecting whether persons or objects are located in the second dynamic area (B) before the machining unit (4) is moved into the second dynamic area (B) with a second sensor (14) and
- decelerating or stopping the machining unit (4) in the event that persons or objects are located in the second dynamic area (B).

10. Machining method according to claim 9, in which the presence ofpersons and/or objects in the second dynamic area (B) is admissible during machining in the first dynamic area (A).

11. Machining method according to claim 9 or 10, in which, as soon as thepersonor object stopping in the second dynamic area (B) after deceleration or stopping have moved away, the machining unit (4) is moved into the second dynamic area (B) for machining.

## Revendications

1. Machine d'usinage (1), pour l'usinage de pièces d'oeuvre (2), composées de préférence, au moins partiellement, de bois, matériaux ligneux, substances analogues à du bois, matière synthétique ou analogue,
avec au moins une unité d'usinage (4) mobile, présentant un premier capteur (10), agencé pour appréhender des objets et des personnes pénétrant dans une zone de sécurité (12) définie dans la zone de l'unité d'usinage (4) mobile,
**caractérisée en ce que**
l'unité d'usinage (4) mobile est déplaçable entre deux zones dynamiques (A, B), et les pièces d'oeuvre (2) peuvent chacune être usinées dans l'une (A) de ces deux sones dynamiques, au moyen de l'unité d'usinage (4) mobile, tandis qu'un chargement et un déchargement des pièces d'oeuvre (2) peut être effectué dans la deuxième (B) zone dynamique, et
la machine d'usinage présente en outre un deuxième capteur (14), agencé pour appréhender des objets et des personnes présents dans la deuxième zone dynamique, avant que l'unité d'usinage (4) ait été déplacée dans la deuxième zone dynamique (B).

2. Machine d'usinage selon la revendication 1, agencée en mode de construction en portique, de manière que l'unité d'usinage (4) soit déplaçable sur une table de bridage de pièces d'oeuvre (6) stationnaire.

3. Machine d'usinage selon la revendication 1 ou 2, dans laquelle l'unité d'usinage (4) mobile présente un capotage de sécurité (8) entourant au moins partiellement l'unité d'usinage (4), le premier capteur (10) étant prévu dans la zone de ce capotage de sécurité (8).

4. Machine d'usinage selon l'une des revendications précédentes, dans laquelle le premier capteur (10) est un capteur travaillant sans contact, en particulier un capteur laser, un capteur à infrarouges, un capteur à ultrasons, un capteur laser à triangulation ou un capteur de détection d'images.

5. Machine d'usinage selon la revendication 4, présentant en outre un dispositif de nettoyage, en particulier un dispositif de ramonage travaillant par soufflage, pour le capteur (10) travaillant sans contact.

6. Machine d'usinage selon l'une des revendications précédentes, dans laquelle le deuxième capteur (14) est un capteur sans contact, tel que, par exemple, une barrière photoélectrique.

7. Machine d'usinage selon l'une des revendications précédentes, dans laquelle le deuxième capteur (14) présente un tronçon (14'), installé de manière stationnaire sur la machine d'usinage (1), et un tronçon (14") déplacé conjointement, disposé sur l'unité d'usinage (4).

8. Machine d'usinage selon l'une des revendications précédentes, présentant en outre un dispositif de commande, agencé pour stopper le fonctionnement au moins d'une partie de la machine d'usinage et/ou empêcher la continuation du déplacement de l'unité d'usinage (4) mobile, lorsque
- le premier capteur (10) appréhende un objet ou une personne dans la zone de sécurité (12), ou
- lorsque l'unité d'usinage (4) mobile doit se déplacer dans la zone de chargement (B) et le deuxième capteur (14) appréhende un objet ou une personne dans la zone de chargement (B).

9. Procédé d'usinage, pour l'usinage de pièces d'oeuvre (2), composées de préférence, au moins partiellement, de bois, matériaux ligneux, substances analogues à du bois, matière synthétique ou analogue,
avec utilisation d'une machine d'usinage selon l'une des revendications précédentes,
le procédé d'usinage comprenant les étapes suivantes :
- détection, avec un deuxième capteur (14), du fait que des personnes ou des objets se trouvent dans la deuxième zone dynamique (B), avant que l'unité d'usinage (4) ait été déplacée dans la deuxième zone dynamique (B), et
- ralentissement ou immobilisation de l'unité d'usinage (4), dans le cas où des personnes ou des objets se trouvent dans la deuxième zone dynamique (B).

10. Procédé d'usinage selon la revendication 9, dans lequel la présence de personnes et/ou d'objets dans la deuxième zone dynamique (B), pendant l'usinage se faisant dans la première zone dynamique (A), est admissible.

11. Procédé d'usinage selon la revendication 9 ou 10, dans lequel, dès que la personne ou l'objet séjournant dans la deuxième zone dynamique (B) après le ralentissement ou l'immobilisation a été évacué(e), l'unité d'usinage (4) est déplacée dans la deuxième zone dynamique (B) pour l'usinage.
